# EUROPÄISCHE PATENTANMELDUNG

(11) **EP 2 602 558 A2**
(43) Veröffentlichungstag der Anmeldung: **12.06.2013**
(21) Anmeldenummer: 12008146.8
(22) Anmeldetag: 05.12.2012
(51) Int. Cl.: F24D 11/02, F24D 19/10

(54) **Vorrichtung und Verfahren zur Wärmeversorgung eines Gebäudes**

(30) Priorität: 08.12.2011 DE 102011120743
(71) Anmelder: Hochschule Für Angewandte Wissenschaften München, 80335 München (DE)
(72) Erfinder: Ziegler, Franz Josef, 86504 Merching (DE)
(74) Vertreter: Hoefer & Partner

(57) **Zusammenfassung**

Die Erfindung bezieht sich auf eine Vorrichtung (1) zur Wärmeversorgung eines Gebäudes, umfassend einen Luft/Fluid-Wärmetauscher (2) zur Erwärmung eines Arbeitsfluides, insbesondere einer Sole, mittels Umgebungsluft, eine Wärmepumpe mit einem Verdampfer (3) zur Erwärmung des Gebäudes und/oder von Wasser für das Gebäude, einen Latentwärmespeicher (4), einen ersten Fluidkreislauf für das Arbeitsfluid zwischen dem Luft/Fluid-Wärmetauscher (2) und dem Latentwärmespeicher (4) zum Aufladen des Latentwärmespeichers unter Umgehung des Verdampfers (3) der Wärmepumpe, einen zweiten Fluidkreislauf für das Arbeitsfluid zwischen dem Luft/Fluid-Wärmetauscher (2) und dem Verdampfer (3) der Wärmepumpe, und einen dritten Fluidkreislauf für das Arbeitsfluid zwischen dem Latentwärmespeicher (4) und dem Verdampfer (3) der Wärmepumpe.

## Beschreibung

Die vorliegende Erfindung betrifft Vorrichtungen sowie ein Verfahren zur Wärmeversorgung eines Gebäudes.

In Deutschland wird mehr als ein Drittel des Primärenergiebedarfs allein für die Raumheizung und Warmwasserbereitung benötigt. Die Steigerung der Energieeffizienz von Heizungs- und Trinkwassererwärmungsanlagen stellt daher eines der grundlegenden energiepolitischen Ziele dar. Die Investitionskosten sind bei der Wärmequelle Luft wesentlich niedriger als bei den Wärmequellen Erdreich oder Grundwasser, die Betriebskosten dagegen bei vorbekannten Anlagen deutlich höher. Die mittlere Jahresarbeitszahl von Luft/Wasser-Wärmepumpen ist niedrig und beträgt nach aktuellen Messungen bei Neubauten 2,9 und im Bestand 2,6.

Die geringe Effizienz hat im Wesentlichen folgende Ursachen:

Niedrige Wärmequellentemperatur: Im Zeitraum von November bis Februar, wenn der Heizwärmebedarf am höchsten ist, ist die Temperaturdifferenz zwischen Heizungsvorlauftemperatur und Wärmequellentemperatur am höchsten und somit die Effizienz der Wärmepumpe am niedrigsten.

Hohe Temperaturdifferenz zwischen Verdampfungstemperatur und Lufteintrittstemperatur: Entsprechend den wirtschaftlichen Randbedingungen weisen die Verdampfer eine begrenzte Wärmeübertragungsfähigkeit auf. Die Verdampfungstemperatur liegt vielfach 8 bis 10 K unter der Lufteintrittstemperatur. Bei Vereisung der Wärmetauscherflächen steigt diese Temperaturdifferenz weiter an.

Hoher Strombedarf der Ventilatoren: Bei Einfamilienhäusern wird die Wärmepumpe in der Regel nicht modulierend betrieben. Der Ventilator ist dementsprechend auf einer hohen Leistungsstufe zu betreiben.

Hoher Strombedarf für die Abtauung des Verdampfers: Wenn die Verdampfungstemperatur unter den Gefrierpunkt sinkt, vereisen die Wärmetauscherflächen und der Luftvolumenstrom durch den Verdampfer nimmt ab. In regelmäßigen Zyklen sind die Wärmetauscheroberflächen mit zusätzlichem Strombedarf abzutauen.

Strombedarf für elektrische Zusatzheizung: Die elektrische Zusatzheizung mit einem Heizstab ist teilweise während der Abtauvorgänge erforderlich sowie bei sehr niedrigen Außentemperaturen.

Es ist die Aufgabe der vorliegenden Erfindung eine Vorrichtung sowie ein Verfahren zur Wärmeversorgung eines Gebäudes bereitzustellen, die kostengünstig und umweltschonend zur Erwärmung eines Gebäudes und/oder zur Erwärmung von Wasser genutzt werden können.

Die Aufgabe wird gelöst durch die Merkmale der unabhängigen Ansprüche. Die abhängigen Ansprüche haben jeweils vorteilhafte Weiterbildungen der Erfindung zum Gegenstand.

Somit wird die Aufgabe gelöst durch eine Vorrichtung zur Wärmeversorgung eines Gebäudes, umfassend einen Luft/Fluid-Wärmetauscher, eine Wärmepumpe mit einem Verdampfer und einen Latentwärmespeicher. Der Luft/Fluid-Wärmetauscher dient zur Erwärmung eines Arbeitsfluides, insbesondere einer Sole, mittels Umgebungsluft. Der Verdampfer ist Bestandteil einer Wärmepumpe. Mit dieser Wärmepumpe wird dem Arbeitsfluid Wärme entzogen, die zur Erwärmung eines Gebäudes und/oder zur Erwärmung von Wasser verwendet wird. Hierzu ist der Verdampfer innerhalb der Wärmepumpe insbesondere mit einem Kondensator verbunden. Der Latentwärmespeicher dient zur Zwischenspeicherung von Wärme. Der Latentwärmespeicher wird hierzu vom Luft/Fluid-Wärmetauscher aufgeladen. Der Verdampfer der Wärmepumpe wird wahlweise vom Latentwärmespeicher oder direkt vom Luft/Fluid-Wärmetauscher gespeist. Hierzu umfasst die erfindungsgemäße Vorrichtung einen ersten Fluidkreislauf für das Arbeitsfluid zwischen dem Luft/Fluid-Wärmetauscher und dem Latentwärmespeicher zum Aufladen des Latentwärmespeichers. In diesem ersten Fluidkreislauf fließt das Arbeitsfluid lediglich zwischen dem Luft/Fluid-Wärmetauscher und dem Latentwärmespeicher und nicht durch den Verdampfer. Ein zweiter Fluidkreislauf verbindet den Luft/Fluid-Wärmetauscher mit dem Verdampfer der Wärmepumpe. Dieser zweite Fluidkreislauf dient zur Übertragung der Wärme vom Luft/Fluid-Wärmetauscher zum Verdampfer. Ein dritter Fluidkreislauf verbindet den Latentwärmespeicher mit dem Verdampfer. Mittels des dritten Fluidkreislaufes kann der Latentwärmespeicher über den Verdampfer der Wärmepumpe entladen werden.

Mit der erfindungsgemäßen Vorrichtung wird insbesondere die Effizienz des Verdampfers dadurch erhöht, dass der Latentwärmespeicher tagsüber bei hohen Außenlufttemperaturen kontinuierlich mittels des Luft/Fluid-Wärmetauschers beladen wird. Gleichzeitig kann der Luft/Fluid-Wärmetauscher auch direkt als Wärmequelle für den Verdampfer genutzt werden.

In bevorzugter Ausführung ist vorgesehen, dass die drei Fluidkreisläufe miteinander verbunden sind, so dass in allen drei Fluidkreisläufen dasselbe Arbeitsfluid fließt. Die drei Fluidkreisläufe stellen somit ein gemeinsames System aus Leitungen dar. In Abhängigkeit der Schaltstellung von Ventilen und/oder Pumpen entstehen in diesem System aus Leitungen die drei unterschiedlichen Fluidkreisläufe zwischen Luft/Fluid-Wärmetauscher, Verdampfer und Latentwärmespeicher.

Des Weiteren umfasst die erfindungsgemäße Vorrichtung bevorzugt zumindest eine erste Pumpe. Diese erste Pumpe ist derart angeordnet, dass sie zum Bewegen des Arbeitsfluides im ersten Fluidkreislauf dient. Insbesondere ist die erste Pumpe unmittelbar vor einem Zulauf des Luft/Fluid-Wärmetauschers angeordnet. Dadurch kann die erste Pumpe insbesondere gleichzeitig zum Bewegen des Arbeitsfluides im zweiten Fluidkreislauf verwendet werden. Insbesondere sind der Latentwärmespeicher und der Ablauf des Verdampfers mit einer Saugseite der ersten Pumpe verbunden.

Des Weiteren ist bevorzugt zumindest eine zweite Pumpe vorgesehen. Diese zweite Pumpe ist zum Bewegen des Arbeitsfluides im zweiten Fluidkreislauf und im dritten Fluidkreislauf angeordnet. Insbesondere befindet sich diese zweite Pumpe direkt vor einem Zulauf des Verdampfers. Die Saugseite der zweiten Pumpe ist bevorzugt mit dem Latentwärmespeicher und mit einem Ablauf des Luft/Fluid-Wärmetauschers verbunden. Dadurch kann die zweite Pumpe sowohl für den zweiten als auch für den dritten Fluidkreislauf das Arbeitsfluid zum Verdampfer fördern.

Darüber hinaus ist bevorzugt ein zum Beimischen von warmem Arbeitsfluid in den Zulauf des Luft/Fluid-Wärmetauschers ausgebildetes Beimischelement vorgesehen. Um eine Vereisung des Luft/Fluid-Wärmetauschers zu vermeiden, kann der Zulauf des Luft/Fluid-Wärmetauschers mit warmem Arbeitsfluid vermischt werden. Dieses warme Arbeitsfluid wird insbesondere aus dem Latentwärmespeicher und/oder vom Ablauf des Luft/Fluid-Wärmetauschers abgezweigt.

In besonders bevorzugter Ausführung ist vorgesehen, dass als Arbeitsfluid eine Sole verwendet wird. Insbesondere wird ein Ethylenglycol/Wasser-Gemisch verwendet.

Des Weiteren ist bevorzugt vorgesehen, dass der Latentwärmespeicher ein Speicherfluid, insbesondere Wasser, und eine als Wärmetauscher ausgebildete Fluidleitung im Speicherfluid für das Arbeitsfluid umfasst. Diese Fluidleitung für das Arbeitsfluid ist insbesondere spiralförmig oder entlang mehrerer Windungen im Speicherfluid angeordnet. Dadurch kann die Fluidleitung im Speicherfluid als Wärmetauscher zwischen dem Arbeitsfluid und dem Speicherfluid genutzt werden. Insbesondere kommen hier günstige Kunststoffrohre als Fluidleitung zum Einsatz.

Besonders bevorzugt ist der Latentwärmespeicher gleichzeitig als Regenwasserzisterne ausgebildet. Das bedeutet, dass der Behälter zur Aufnahme des Speicherfluides einen Zu- und Ablauf für Regenwasser aufweist. Das verwendete Speicherfluid ist infolgedessen Regenwasser. So kann ein sehr günstiger Behälter für den Latentwärmespeicher gleichzeitig auch zur Aufbewahrung von Regenwasser für eine Bewässerung verwendet werden. Des Weiteren umfasst der Latentwärmespeicher bevorzugt zumindest eine Umwälzpumpe für das Speicherfluid. Die Fluidleitungen im Speicherfluid sind insbesondere mit Eis ummantelt. Bei Temperaturen zwischen 1 °C und 10°C ist die Dichteänderung von Wasser sehr gering und der äußere Wärmeübergang durch freie Konvektion schlecht. In diesem Temperaturbereich kann insbesondere durch die Umwälzung des Speicherfluides mittels der Umwälzpumpe der Wärmeübergang an der Außenseite deutlich verbessert werden. Die Anordnung der Fluidleitungen wird insbesondere entsprechend der Geometrie der Regenwasserzisterne ausgeführt.

Die Umwälzung des im Latentwärmespeicher befindlichen Speicherfluides kann bevorzugt auch mit einer externen Umwälzpumpe erfolgen. Hier kann über einen zusätzlichen externen Wärmeübertrager die Wärme sehr effizient vom Speicherfluid an das Arbeitsfluid und umgekehrt übertragen werden. Wird der Luft/Fluid-Wärmetauscher nur mit Fluid-Vorlauftemperaturen größer 0°C betrieben, so kann das Beimischelement (Mischventil) zur Regelung der Vorlauftemperatur entfallen.

Des Weiteren umfasst die erfindungsgemäße Vorrichtung bevorzugt eine Steuereinheit. Die Steuereinheit ist ausgebildet zur Erfassung einer Umgebungslufttemperatur des Luft/Fluid-Wärmetauschers, zur Erfassung einer Taupunkttemperatur der Umgebungsluft des Luft/Fluid-Wärmetauschers und zur Erfassung einer Arbeitsfluidaustrittstemperatur des Latentwärmespeichers. Die Taupunkttemperatur kann beispielsweise durch Messung der Umgebungsluftfeuchtigkeit der Umgebungsluft des Luft/Fluid-Wärmetauschers ermittelt werden. Die Arbeitsfluidaustrittstemperatur des Latentwärmespeichers wird zwischen dem Latentwärmespeicher und dem Zulauf des Luft/Fluid-Wärmetauschers gemessen. Des Weiteren ist die Steuereinheit zum Einschalten des Arbeitsfluidstroms im ersten Fluidkreislauf ausgebildet. Durch Aktivierung des ersten Fluidkreislaufes wird der Latentwärmespeicher aufgeladen. Dieses Einschalten des ersten Fluidkreislaufes erfolgt bevorzugt nur, wenn die Umgebungslufttemperatur über der Arbeitsfluidaustrittstemperatur liegt, und/oder nur, wenn die Arbeitsfluidaustrittstemperatur über der Taupunkttemperatur liegt. Insbesondere wird der erste Fluidkreislauf nur eingeschalten, wenn die Umgebungslufttemperatur um zumindest 1 K, insbesondere zumindest 2 K, über der Arbeitsfluidaustrittstemperatur liegt. In entsprechender Weise wird bevorzugt der erste Fluidkreislauf zugeschalten, wenn die Arbeitsfluidaustrittstemperatur 1 K, insbesondere zumindest 2 K, insbesondere zumindest 5 K, über der Taupunkttemperatur liegt.

Insbesondere ist die Steuereinheit mit Ventilen und Pumpen innerhalb der drei Fluidkreisläufe verbunden, so dass mittels der Steuereinheit die einzelnen Fluidkreisläufe aktiviert werden können.

Die Erfindung umfasst des Weiteren ein Verfahren zur Wärmeversorgung eines Gebäudes mit einem Latentwärmespeicher, der über einen ersten Fluidkreislauf mit einem Luft/Fluid-Wärmetauscher verbunden ist. Dabei wird der Latentwärmespeicher mittels des Luft/Fluid-Wärmetauschers nur aufgeladen, wenn eine Umgebungslufttemperatur des Luft/Fluid-Wärmetauschers über einer Arbeitsfluidaustrittstemperatur des Latentwärmespeichers liegt, und/oder nur, wenn die Arbeitsfluidaustrittstemperatur des Latentwärmespeichers über einer Taupunkttemperatur der Umgebungsluft des Luft/Fluid-Wärmetauschers liegt. Insbesondere muss die Umgebungslufttemperatur zumindest 1 K, insbesondere zumindest 2 K über der Arbeitsfluidaustrittstemperatur liegen, und/oder die Arbeitsfluidaustrittstemperatur zumindest 1 K, insbesondere zumindest 2 K, insbesondere zumindest 5 K, über der Taupunkttemperatur liegen.

Die im Rahmen der erfindungsgemäßen Vorrichtung beschriebenen vorteilhaften Ausgestaltungen finden entsprechend vorteilhafte Anwendung auf das erfindungsgemäße Verfahren.

Insbesondere ist vorgesehen, dass der Latentwärmespeicher nur als Kurzzeitwärmespeicher verwendet wird. Demgemäß wird bevorzugt der Latentwärmespeicher in einzelnen Aufladezyklen von in der Regel höchstens zwölf Stunden, insbesondere höchstens sechs Stunden, aufgeladen. Zwischen den Aufladezyklen wird der Latentwärmespeicher entweder nicht aufgeladen oder über den Verdampfer der Wärmepumpe entladen. Nach z.B. einem Wetterumschwung im Winter (insbesondere wenn auch nachts die Außenlufttemperaturen über 0 °C liegen) kann der Aufladezyklus abweichend von der Regel auch mehrere Tage dauern, bis das Eis im Speicher vollständig geschmolzen ist.

Bevorzugt wird in der erfindungsgemäßen Vorrichtung und im erfindungsgemäßen Verfahren der Latentwärmespeicher nur tagsüber und insbesondere bei hohen Außenlufttemperaturen kontinuierlich mittels des Luft/Fluid-Wärmetauschers aufgeladen. Bevorzugt wird dabei die Arbeitsfluideintrittstemperatur am Luftkühler des Luft/Fluid-Wärmetauschers durch das Beimischelement so weit angehoben, dass im Luftkühler keine Vereisung auftritt. Die entsprechende Mindesteintrittstemperatur des Arbeitsfluides für den Luft/Fluid-Wärmetauscher kann durch Messung der Umgebungslufttemperatur und der Taupunkttemperatur bzw. der relativen Luftfeuchte bestimmt werden. Die Wärmepumpe wird insbesondere für eine geringe Temperaturspreizung im Arbeitsfluid ausgebildet.

Die Erfindung umfasst eine weitere Vorrichtung zur Wärmeversorgung eines Gebäudes. Diese weitere Vorrichtung umfasst einen zur Aufnahme von Grundwasser ausgebildeten Latentwärmespeicher, wobei der Latentwärmespeicher zur Erwärmung eines Arbeitsfluides, insbesondere einer Sole, mittels Grundwasser ausgebildet ist. Des Weiteren ist eine Wärmepumpe mit einem Verdampfer zur Erwärmung des Gebäudes und/oder von Wasser für das Gebäude vorgesehen. Zwischen dem Latentwärmespeicher und dem Verdampfer der Wärmepumpe ist ein Fluidkreislauf für das Arbeitsfluid vorgesehen. Darüber hinaus sind ein Grundwasserentnahmebrunnen und ein Grundwasserzulauf von dem Grundwasserentnahmebrunnen in den Latentwärmespeicher vorgesehen. In bevorzugter Ausbildung umfasst diese weitere Vorrichtung auch einen Grundwasserrückgabebrunnen und eine Grundwasserrückführung vom Latentwärmespeicher in den Grundwasserrückgabebrunnen.

Insbesondere kann die zuerst beschriebene erfindungsgemäße Vorrichtung mit dieser weiteren erfindungsgemäßen Vorrichtung kombiniert werden. Dabei wird der Latentwärmespeicher nicht als Regenwasserzisterne ausgebildet, sondern über den Grundwasserzulauf mit dem Grundwasserentnahmebrunnen verbunden und so das Arbeitsfluid im Latentwärmespeicher über das Grundwasser erwärmt. Dabei kann insbesondere wahlweise umgeschaltet werden zwischen einer Erwärmung des Arbeitsfluides mittels des Luft/Fluid-Wärmetauschers und der Erwärmung des Arbeitsfluides mittels des Grundwassers über den Latentwärmespeicher.

Ferner ist in der weiteren Vorrichtung vorgesehen, dass als Arbeitsfluid insbesondere ein Ethylenglycol/Wasser-Gemisch verwendet wird.

Bevorzugt wird eine Pumpe angeordnet, die das Grundwasser vom Grundwasserentnahmebrunnen in den Latentwärmespeicher fördert. Bevorzugt wird Grundwasser mit einer Temperatur von etwa 12 °C entnommen. Durch einen Überlauf strömt das, auf insbesondere ca. 7 °C abgekühlte, Grundwasser in den Grundwasserrückgabebrunnen. Besonders bevorzugt wird der Latentwärmespeicher im Erdreich in einer entsprechenden Tiefe eingebaut, so dass die Höhendifferenz zwischen der Füllstandshöhe im Latentwärmespeicher und dem Grundwasserspiegel gering ist.

Dies ermöglicht einen geringen Hilfsenergiebedarf für die Grundwasserpumpe. Zudem ändert sich die Gaslöslichkeit, die vom Druck und der Temperatur des Grundwassers abhängt, nur geringfügig. Die Gefahr einer Verockerung des Grundwasserrückgabebrunnens wird dadurch reduziert.

Im Normalbetrieb tritt keine Vereisung im Latentwärmespeicher auf. Bei Ausfall der Grundwasserpumpe kann die Wärmepumpe einige Tage im Notbetrieb weitergenutzt werden.

Bevorzugt wird der Latentwärmespeicher gleichmäßig mit Grundwasser durchströmt, damit sich der äußere Wärmeübergang an den Kunststoffrohren, in denen das Arbeitsfluid geführt ist, verbessert. Die Verschmutzungsgefahr beim Wärmeübertrager im Latentwärmespeicher und die Verockerungsgefahr beim Grundwasserrückgabebrunnen ist geringer als bei herkömmlichen Wärmepumpenanlagen mit der Wärmequelle Grundwasser. Bevorzugt kann das Anlagenkonzept eingesetzt werden, wenn das Grundwasser hohe Verunreinigungen, wie z.B. Mangan und Eisen, aufweist oder Korrosionsgefahr bei metallischen Werkstoffen gegeben ist.

Somit ist bevorzugt vorgesehen, dass die Leitungen für das Arbeitsfluid im Latentwärmespeicher aus Kunststoff gebildet sind. Des Weiteren erfolgt bevorzugt eine konstante Durchströmung des Latentwärmespeichers mit dem Grundwasser.

Die Erfindung umfasst ferner eine Vorrichtung zur Wärmeversorgung eines Gebäudes, umfassend einen zur Aufnahme eines Speicherfluides, vorzugsweise Wasser, ausgebildeten Latentwärmespeicher, wobei der Latentwärmespeicher zur Erwärmung eines Arbeitsfluides, insbesondere einer Sole, mittels des Speicherfluides ausgebildet ist, eine Wärmepumpe mit einem Verdampfer zur Erwärmung des Gebäudes und/oder von Wasser für das Gebäude, einen Fluidkreislauf für das Arbeitsfluid zwischen dem Latentwärmespeicher und dem Verdampfer der Wärmepumpe, und einen Luft/Fluid-Wärmetauscher zum Erwärmen des Speicherfluides. Vorzugsweise ist vorgesehen, dass ein vom Luft/Fluid-Wärmetauscher kommender Rücklauf als freier Auslauf im Latentwärmespeicher ausgebildet ist. Ferner ist vorzugsweise ein außerhalb des Latentwärmespeichers angeordneter Wärmeübertrager zum Übertragen der Wärme aus dem Speicherfluid in das Arbeitsfluid vorgesehen.

Im Folgenden werden Ausführungsbeispiele der Erfindung anhand der begleitenden Zeichnungen genauer erläutert. Dabei zeigen:
- Fig. 1: eine schematische Ansicht einer erfindungsgemäßen Vorrichtung zur Wärmeversorgung eines Gebäudes gemäß einem ersten Ausführungsbeispiel,
- Fig. 2: einen Schnitt durch einen Latentwärmespeicher der erfindungsgemäßen Vorrichtung gemäß dem ersten Ausführungsbeispiel,
- Fig. 3: ein Diagramm mit Temperaturverläufen und Aufladezyklen für die erfindungsgemäße Vorrichtung gemäß dem ersten Ausführungsbeispiel,
- Fig. 4: eine alternative Ausbildung des Latentwärmespeichers der erfindungsgemäßen Vorrichtung gemäß dem ersten Ausführungsbeispiel,
- Fig. 5: eine schematische Ansicht einer erfindungsgemäßen Vorrichtung zur Wärmeversorgung eines Gebäudes gemäß einem zweiten Ausführungsbeispiel,
- Fig. 6: eine schematische Ansicht einer erfindungsgemäßen Vorrichtung zur Wärmeversorgung eines Gebäudes gemäß einem dritten Ausführungsbeispiel, und
- Fig. 7: eine schematische Ansicht einer erfindungsgemäßen Vorrichtung zur Wärmeversorgung eines Gebäudes gemäß einem vierten Ausführungsbeispiel.

Gleiche bzw. funktonal gleiche Bauteile sind in allen Ausführungsbeispielen mit denselben Bezugszeichen versehen.

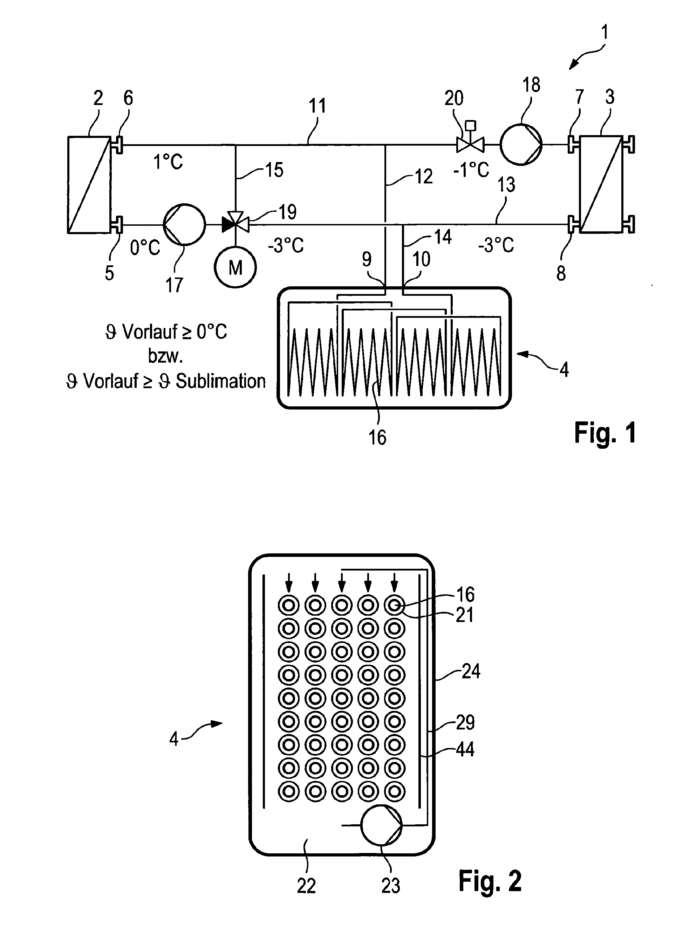

Im Folgenden wird anhand der Fig. 1 bis 4 das erste Ausführungsbeispiel der erfindungsgemäßen Vorrichtung 1 sowie die Funktionsweise des erfindungsgemäßen Verfahrens erläutert.

Fig. 1 zeigt eine schematische Darstellung der Vorrichtung 1 zur Wärmeversorgung eines Gebäudes. Die Vorrichtung 1 umfasst einen Luft/Fluid-Wärmetauscher 2, einen Verdampfer 3 einer Wärmepumpe und einen Latentwärmespeicher 4.

Der Luft/Fluid-Wärmetauscher 2 umfasst einen Wärmetauscherzulauf 5 und einen Wärmetauscherablauf 6. Der Verdampfer umfasst einen Verdampferzulauf 7 und einen Verdampferablauf 8. Der Latentwärmespeicher 4 umfasst einen ersten Speicheranschluss 9 und einen zweiten Speicheranschluss 10.

Die im Folgenden beschriebenen Leitungen sind allesamt für das Arbeitsmedium der Vorrichtung 1 ausgelegt. Als Arbeitsmedium kommt insbesondere Sole zum Einsatz. Eine erste Leitung 11 verbindet den Wärmetauscherablauf 6 mit dem Verdampferzulauf 7. Eine zweite Leitung 12 verbindet den Wärmetauscherablauf 6 und den Verdampferzulauf 7 mit dem ersten Speicheranschluss 9. Eine dritte Leitung 13 verbindet den Verdampferablauf 8 mit dem Wärmetauscherzulauf 5. Eine vierte Leitung 14 verbindet den Verdampferablauf 8 und den Wärmetauscherzulauf 5 mit dem zweiten Speicheranschluss 10. Eine fünfte Leitung 15 verbindet den ersten Speicheranschluss 9 und den Wärmetauscherablauf 6 mit einem Beimischelement 19.

Bei der fünften Leitung 15 ist ausschlaggebend, dass sie warmes Arbeitsfluid dem Beimischelement 19 zuführt. Dieses Beimischelement 19 dient zum Beimischen dieses warmen Arbeitsfluides in den Wärmetauscherzulauf 5 bzw. in die dritte Leitung 13.

Des Weiteren zeigt Fig. 1 eine sechste Leitung 16. Die sechste Leitung 16 führt vom ersten Speicheranschluss 9 zum zweiten Speicheranschluss 10 und schlängelt sich im Inneren des Latentwärmespeichers 4. Der Latentwärmespeicher 4 und die sechste Leitung 16 werden im Detail im Zusammenhang mit Fig. 2 beschrieben.

Fig. 1 zeigt ferner eine erste Pumpe 17. Die Druckseite der ersten Pumpe 17 ist mit dem Wärmetauscherzulauf 5 verbunden. Die Saugseite der ersten Pumpe 17 ist mit dem zweiten Speicheranschluss 10 und dem Verdampferablauf 8 verbunden. Insbesondere ist die erste Pumpe 17 zwischen dem Beimischelement 19 und dem Wärmetauscherzulauf 5 angeordnet.

Ferner umfasst die Vorrichtung 1 eine zweite Pumpe 18. Die Pumpseite der zweiten Pumpe 18 ist mit dem Verdampferzulauf 7 verbunden. Die Saugseite der zweiten Pumpe 18 ist mit dem ersten Speicheranschluss 9 und dem Wärmetauscherablauf 6 verbunden. Des Weiteren befindet sich vor dem Verdampferzulauf 7 ein Absperrventil 20, insbesondere in der ersten Leitung 11. Wie Fig. 1 zeigt, ist die zweite Pumpe 18 bevorzugt zwischen dem Absperrventil 20 und dem Verdampferzulauf 7 angeordnet.

In der Vorrichtung 1 kann mittels der beiden Pumpen 17, 18 und dem Absperrventil 20 das Arbeitsfluid in drei verschiedenen Fluidkreisläufen bewegt werden. Ein erster Fluidkreislauf verbindet den Luft/Fluid-Wärmetauscher 2 mit dem Latentwärmespeicher 4. Dieser erste Fluidkreislauf ist gebildet durch die erste Leitung 11, die von der ersten Leitung 11 abzweigende zweite Leitung 12, die vierte Leitung 14, welche in die dritte Leitung 13 mündet, und die dritte Leitung 13. Angetrieben wird der erste Fluidkreislauf durch die erste Pumpe 17. Insbesondere dient der erste Fluidkreislauf zum Aufladen des Latentwärmespeichers. Hierbei ist das Absperrventil 20 geschlossen.

Ein zweiter Fluidkreislauf verbindet den Luft/Fluid-Wärmetauscher 2 mit dem Verdampfer 3. Dieser zweite Fluidkreislauf wird gebildet durch die erste Leitung 11 und die dritte Leitung 13. Dieser Fluidkreislauf kann durch die erste Pumpe 17 und/oder die zweite Pumpe 18 angetrieben werden. Insbesondere ist ein hier nicht dargestelltes weiteres Absperrventil in der zweiten Leitung 12 und/oder in der vierten Leitung 14 vorgesehen, so dass der Latentwärmespeicher bei einer direkten Wärmeübertragung vom Luft/Fluid-Wärmetauscher 2 zum Verdampfer 3 abgesperrt werden kann.

Ein dritter Fluidkreislauf verbindet den Latentwärmespeicher 4 mit dem Verdampfer 3 der Wärmepumpe. Dieser dritte Fluidkreislauf ist gebildet durch die zweite Leitung 12, einen Teil der ersten Leitung 11, einen Teil der dritten Leitung 13 und die vierte Leitung 14, welche von der dritten Leitung 13 abzweigt. Dieser dritte Fluidkreislauf wird durch die zweite Pumpe 18 angetrieben. Dabei kann insbesondere das Beimischelement 19 zum Absperren des Luft/Fluid-Wärmetauschers 2 verwendet werden.

Fig. 2 zeigt eine Schnittansicht des Latentwärmespeichers 4. Der Latentwärmespeicher 4 ist in diesem Ausführungsbeispiel als Regenwasserzisterne ausgebildet. Hierzu umfasst der Latentwärmespeicher 4 eine Wandung bzw. einen Behälter 24. In diesem Behälter 24 befindet sich als Speicherfluid 22 Regenwasser. Durch dieses Speicherfluid 22 schlängelt sich die sechste Leitung 16 vom ersten Speicheranschluss 9 bis zum zweiten Speicheranschluss 10. Die sechste Leitung 16 ist insbesondere aus preisgünstigem Kunststoff hergestellt und dient als Wärmetauscher zwischen dem Arbeitsfluid und dem Speicherfluid 22. Mit dem Bezugszeichen 21 ist in Fig. 2 eine Vereisung der sechsten Leitung 16 im Latentwärmespeicher 4 dargestellt. Zur Umwälzung der Speicherfluides 22 ist eine Umwälzpumpe 23 im Latentwärmespeicher 4 angeordnet. Mittels der dargestellten Umwälzleitung 29 und/oder mittels der dargestellten Trennwände 44 kann die Umwälzpumpe 23 das Speicherfluid 22 von einer Seite auf die andere Seite des Behälters 24 pumpen. Dadurch ist ein guter Wärmeaustausch zwischen Speicherfluid 22 und Arbeitsfluid gewährleistet.

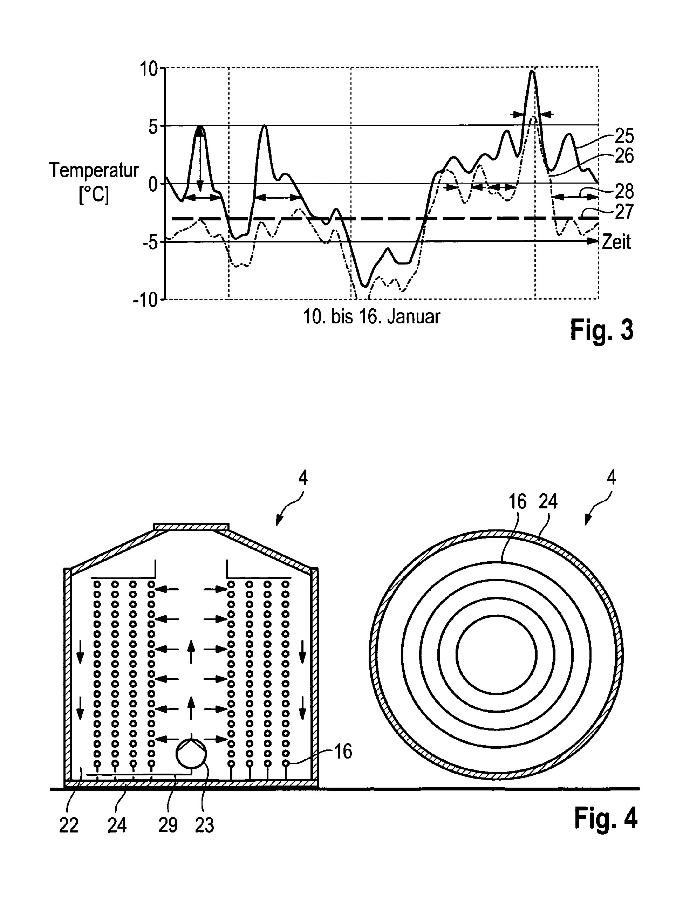

Das Diagramm in Fig. 3 zeigt auf der horizontalen Achse die Zeit. Dargestellt sind sieben Tage einer Messung vom 10. bis zum 16. Januar in München. Auf der Hochachse ist die Temperatur in Grad Celsius dargestellt. Ein erster Verlauf zeigt die Umgebungstemperatur 25. Ein zweiter Verlauf zeigt die Taupunkttemperatur 26. Die gestrichelte Gerade 27 zeigt die Temperatur des Arbeitsfluides in der Vorrichtung 1. Die horizontalen Pfeile zeigen Zeitpunkt und Zeitdauer von Aufladezyklen 28 für den Latentwärmespeicher 4. Die Umgebungstemperatur 25 wurde in der Umgebungsluft des Luft/Fluid-Wärmetauschers 2 gemessen. Die Taupunkttemperatur 26 bezieht sich ebenfalls auf die Umgebungstemperatur des Luft/Fluid-Wärmetauschers 2 und wurde berechnet aus der Umgebungstemperatur und einer relativen Luftfeuchte der Umgebungstemperatur. Die Arbeitsfluidtemperatur ist die Arbeitsfluidaustrittstemperatur 27 des Latentwärmespeichers 4. Diese wurde gemessen zwischen dem zweiten Speicheranschluss 10 und dem Wärmetauscherzulauf 5. Alternativ kann die Arbeitsfluidaustrittstemperatur 27 des Latentwärmespeichers 4 auch zwischen dem ersten Speicheranschluss 9 und dem Verdampferzulauf 7 oder im Inneren des Latentwärmespeichers 4 gemessen werden. Während der Aufladezyklen 28 wird der erste Fluidkreislauf aktiviert, so dass mittels des Luft/Fluid-Wärmetauschers 2 der Latentwärmespeicher 4 aufgeladen wird. Fig. 3 zeigt einen typischen Verlauf der Außenlufttemperatur (Umgebungslufttemperatur 25) und der Taupunkttemperatur 26 im Januar für München. Für die dargestellte Arbeitsfluidaustrittstemperatur 27 aus dem Latentwärmespeicher 4 von -3°C sind die möglichen Aufladezyklen 28 mit horizontalen Pfeilen dargestellt.

Mit der erfindungsgemäßen Vorrichtung 1 und/oder dem erfindungsgemäßen Verfahren kann der Stromverbrauch der Wärmepumpe stark reduziert werden. In einer ersten Versuchsanlage soll die mittlere Jahresarbeitszahl bei Neubauten von derzeit 2,9 auf Werte bis zu 4,5 angehoben werden. Hocheffiziente Vorrichtungen 1 erreichen somit Jahresarbeitszahlen wie Anlagen mit Erdkollektoren. Neben der Energieeffizienz stellen die Schallemissionen des Luftkühlers von Luft/Fluid-Wärmetauschern im Stand der Technik ein großes Problem dar. Bei der hier vorgestellten Vorrichtung 1 sind die Schallemissionen durch den Dauerbetrieb am Tag bei meist niedriger Drehzahlstufe wesentlich niedriger. Nachts ist der Luftkühler des Luft/Fluid-Wärmetauschers 2 normalerweise nicht im Betrieb. Somit sind strenge Emissionsrichtwerte in der Nacht unproblematisch. Bekannte Anlagen werden häufig mit einer Solaranlage zur Trinkwassererwärmung kombiniert. Dabei werden bei Neubauten Gesamt-Systemarbeitszahlen von 2,8 bis 3,4 erreicht. Mit der erfindungsgemäßen Vorrichtung 1 mit Latentwärmespeicher 4 können bei Verzicht auf die Solaranlage Gesamt-Systemarbeitszahlen von weit über 4 erreicht werden.

Unter Berücksichtigung der Doppeinutzung des Behälters 24 für Regenwasser 22 und für den Latenfinrärmespeicher 4 sind die Investitionskosten für die erfindungsgemäße Vorrichtung 1 deutlich niedriger als bei herkömmlichen Vorrichtungen mit Solaranlagen.

Des Weiteren ergeben sich aus der erfindungsgemäßen Vorrichtung 1 und dem entsprechenden Verfahren die folgenden Vorteile:

Erfindungsgemäß entsteht eine höhere Wärmequellentemperatur. Der Latentwärmespeicher 4 gewährleistet im Zeitraum November bis Februar in Mitteleuropa Arbeitsfluidtemperaturen meist zwischen -3°C und -5°C. Demgegenüber sind bei Erdkollektoren die Arbeitsfluidtemperaturen zu Beginn der Heizperiode etwas höher, am Ende etwas niedriger. Der Strombedarf der erfindungsgemäßen Vorrichtung für die Ventilatoren, beispielsweise im Luft/Fluid-Wärmetauscher 2, ist sehr gering und die Ventilatoren können bevorzugt bedarfsgerecht mit geringer Drehzahl betrieben werden. Darüber hinaus hat die erfindungsgemäße Vorrichtung 1 keinen Strombedarf für die Abtauung des Verdampfers 3. Bei herkömmlichen Anlagen werden 5% bis 10% des Strombedarfs für die Abtaueinrichtung benötigt. Darüber hinaus bedarf es bei der erfindungsgemäßen Vorrichtung 1 keines Stroms für eine elektrische Zusatzheizung, da ein ausreichend dimensionierter Latentwärmespeicher 4 einen kontinuierlichen Heizbetrieb auch bei sehr niedrigen Außenlufttemperaturen gewährleistet. Des Weiteren kann der Aufstellort des Luftkühlers beliebig gewählt werden, da keine Luftkanäle, Splitausführung oder Abtaueinrichtungen nötig sind. Im Gegensatz zu Erdkollektoren oder geothermischen Anlagen besteht kein Bohrrisiko und es sind keine wasserrechtlichen oder geologischen Auflagen zu erfüllen. Insbesondere kommt die erfindungsgemäße Vorrichtung 1 und/oder das erfindungsgemäße Verfahren in Gebäuden mit Flächenheizung und/oder sehr gutem Wärmeschutzstandard zum Einsatz.

Fig. 4 zeigt eine alternative Ausgestaltung des Latentwärmespeichers 4 als Alternative zu Fig. 2. In Fig. 4 auf der linken Seite ist ein vertikaler Schnitt durch den Latentwärmespeicher 4 dargestellt. Die rechte Darstellung zeigt einen horizontalen Schnitt. Im Gegensatz zu der Variante in Fig. 2 ist hier der Behälter 24 tonnenförmig ausgestaltet. Die sechste Leitung 16 für das Arbeitsfluid im Latentwärmespeicher 4 ist kreis- oder spiralförmig angeordnet. Der Anfang und das Ende der sechsten Leitung 16 sind wiederum mit dem ersten Speicheranschluss 9 und dem zweiten Speicheranschluss 10 (hier nicht dargestellt) verbunden.

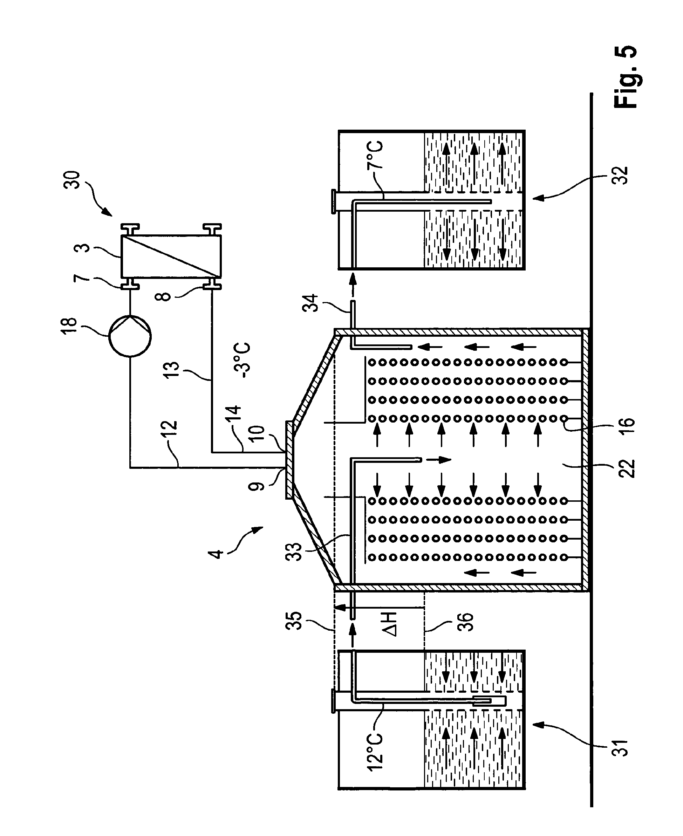

Fig. 5 zeigt eine Vorrichtung 30 zur Wärmeversorgung eines Gebäudes gemäß dem zweiten Ausführungsbeispiel. Im Unterschied zum ersten Ausführungsbeispiel ist im zweiten Ausführungsbeispiel kein Luft/Fluid-Wärmetauscher 2 zur Erwärmung des Arbeitsfluides vorgesehen. Im zweiten Ausführungsbeispiel wird als Speicherfluid 22 Grundwasser verwendet. Hierzu sind ein Grundwasserentnahmebrunnen 31 und ein Grundwasserrückgabebrunnen 32 vorgesehen. Der Grundwasserentnahmebrunnen 31 ist über eine erste Grundwasserleitung 33 mit dem Inneren des Latentwärmespeichers 4 verbunden. Über einen hier nicht dargestellten Überlauf ist der Latentwärmespeicher 4 mit einer zweiten Grundwasserleitung 34 und somit mit dem Grundwasserrückgabebrunnen 32 verbunden. Insbesondere mittels einer hier nicht dargestellten Grundwasserpumpe erfolgt ein stetiger Austausch des Grundwassers im Latentwärmespeicher 4. Die Fluidleitung für das Arbeitsfluid ist, wie beispielsweise auch in Fig. 4 gezeigt, spiralförmig oder kreisförmig im Latentwärmespeicher 4 angeordnet. Dadurch erfolgt ein optimaler Wärmeübergang vom Grundwasser auf das Arbeitsfluid.

Fig. 5 zeigt des Weiteren einen Grundwasserspiegel 36 und eine Füllstandshöhe 35 des Latentwärmespeichers 4. Besonders bevorzugt wird der Latentwärmespeicher 4 so tief angeordnet, dass die Höhe H zwischen der Füllstandshöhe 35 und dem Grundwasserspiegel 36 möglichst gering ist. Dadurch wird möglichst wenig Energie für die Grundwasserpumpe benötigt.

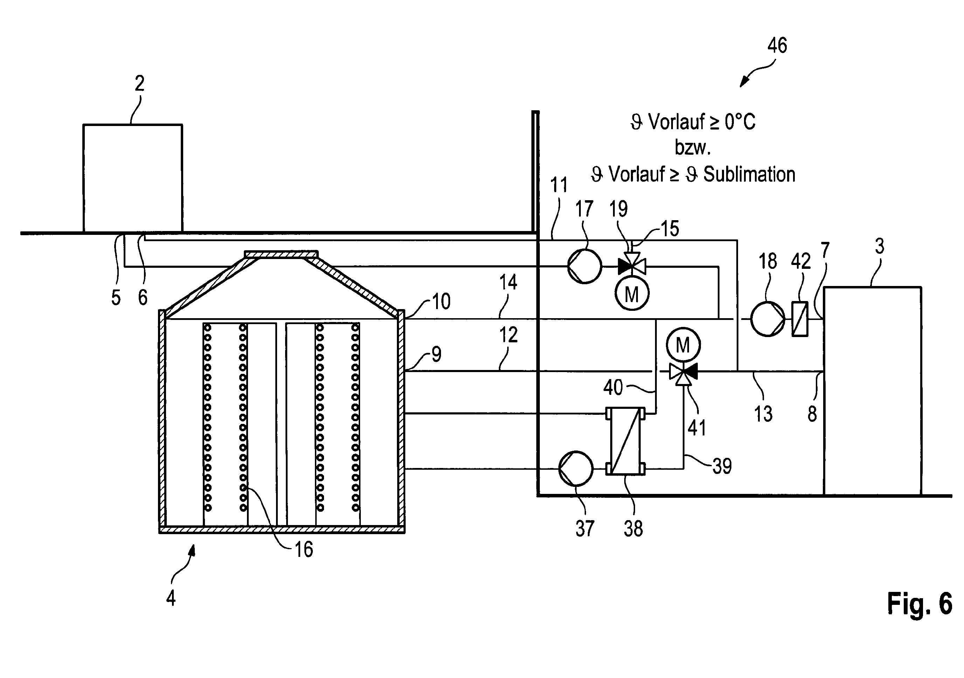

Fig. 6 zeigt eine schematische Darstellung der Vorrichtung 46 zur Wärmeversorgung eines Gebäudes gemäß einem dritten Ausführungsbeispiel. Im dritten Ausführungsbeispiel erfolgt eine Umwälzung des im Latentwärmespeicher 4 befindlichen Speicherfluides 22 mit einer externen Umwälzpumpe 37. Über einen zusätzlichen externen Wärmeübertrager 38 kann die Wärme sehr effizient vom Speicherfluid 22 an das Arbeitsfluid und umgekehrt übertragen werden. Wir der Luft/Fluid-Wärmetauscher 2 nur mit Fluid-Vorlauftemperaturen größer 0°C betrieben, so kann das Beimischelement 19 zur Regelung der Vorlauftemperatur entfallen.

Der Wärmeübertrager 38 ist außerhalb des Latentwärmespeichers 4, insbesondere im Gebäude, angeordnet. In der dritten Leitung 13, also im Rücklauf vom Verdampfer 3 zum Latentwärmespeicher 4, ist ein Umschaltventil 41 angeordnet. Das Umschaltventil 41 ist über eine siebte Leitung 39 mit dem Wärmeübertrager 38 verbunden. Eine achte Leitung 40 verbindet den Wärmeübertrager 38 direkt mit der vierten Leitung 14, also dem Vorlauf des Luft/Fluid-Wärmetauschers 2 und des Verdampfers 3. Das Umschaltventil 41 ermöglicht eine effiziente Wärmeentnahme aus dem Latentwärmespeicher 4 mittels des Wärmeübertragers 38, wenn die Temperatur des Speicherfluids 22 höher als 1°C ist. Das Umschaltventil 41 ermöglicht ebenso eine effiziente Regeneration des Latentwärmespeichers 4 mittels des Wärmeübertragers 38, wenn die Rücklauftemperatur am Luft/Fluidwärmetauscher 2 höher als 2°C ist.

Im dritten Ausführungsbeispiel bildet die vierte Leitung 14 einen direkten Vorlauf vom Latentwärmespeicher 4 zum Luft/Fluid-Wärmetauscher 2 und zum Verdampfer 3 der Wärmepumpe. Zwischen der zweiten Pumpe 18 und dem Verdampferzulauf 7 ist ein Rückschlagventil 42 angeordnet. Die zweite Leitung 12 bildet einen gemeinsamen Rücklauf vom Luft/Fluid-Wärmetauscher 2 und vom Verdampfer 3 in Latentwärmespeicher 4. Der zweite Fluidkreislauf, also die Verbindung des Luft/Fluid-Wärmetauscher 2 mit dem Verdampfer 3, führt somit im dritten Ausführungsbeispiel über den Latentwärmespeicher 4.

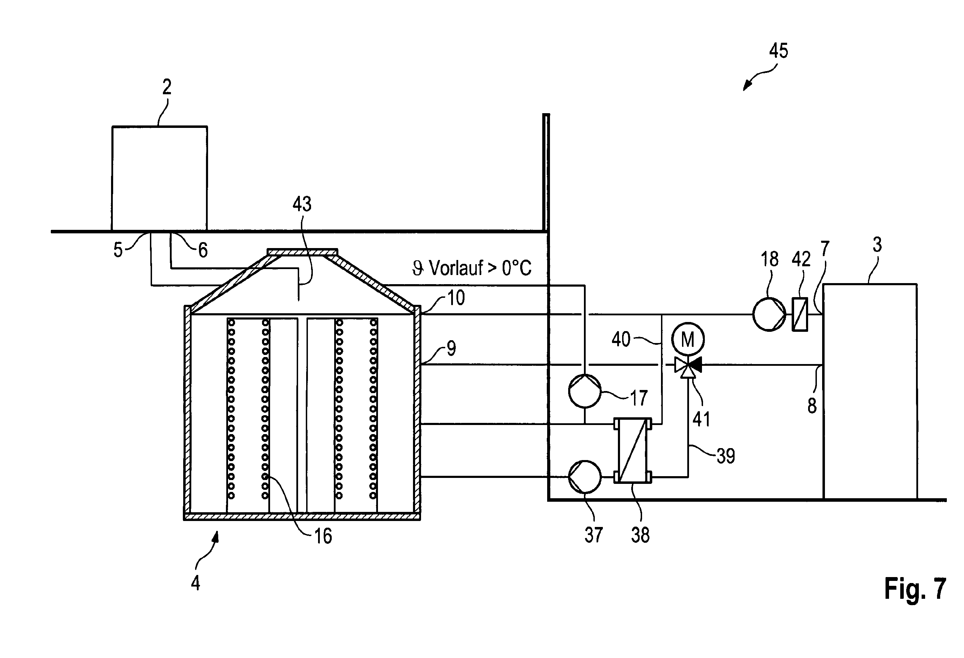

Fig. 7 zeigt eine schematische Darstellung der Vorrichtung 45 zur Wärmeversorgung eines Gebäudes gemäß einem vierten Ausführungsbeispiel. Gemäß dem vierten Ausführungsbeispiel wird eine einfache und effiziente Regeneration des Latentwärmespeichers 4 (auch: Eisspeicher) durch eine direkte Erwärmung des Speicherfluides 22 mit dem Luft/Fluid-Wärmetauscher 2 erreicht. Dies erfolgt vorzugsweise bei einer Außenlufttemperatur größer 2°C, was an vielen Wintertagen über mehrere Stunden möglich ist. Als Speicherfluid 22 wird Wasser verwendet. Der Rücklauf vom Luft/Fluid-Wärmetauscher 2 in den Latentwärmespeicher 4 ist als freier Auslauf 43 ausgeführt, damit ein vollständiges Entleeren des Luft/Fluid-Wärmetauschers 2 und der frostgefährdeten Leitungen beim Ausschalten der ersten Pumpe 17 sichergestellt ist. Der Latentwärmespeicher 4 ist im vierten Ausführungsbeispiel für eine mehrwöchige Kälteperiode ohne Regenerationsmöglichkeit zu dimensionieren.

Entsprechend der Funktionsweise der Vorrichtung 45 im vierten Ausführungsbeispiel, wird der Wärmetauscherzulauf 5 über die erste Pumpe 17 mit Speicherfluid 22 aus dem Latentwärmespeicher 4 versorgt. Wie im dritten Ausführungsbeispiel erfolgt auch hier eine Übertragung der Wärme vom Speicherfluid 22 auf das Arbeitsfluid und umgekehrt mittels des Wärmeübertragers 38 und dem Umschaltventil 41.

### Bezugszeichenliste

- 1: Vorrichtung
- 2: Luft/Fluid-Wärmetauscher
- 3: Verdampfer der Wärmepumpe
- 4: Latentwärmespeicher
- 5: Wärmetauscherzulauf
- 6: Wärmetauscherablauf
- 7: Verdampferzulauf
- 8: Verdampferablauf
- 9: erster Speicheranschluss
- 10: zweiter Speicheranschluss
- 11-16: erste bis sechste Leitung
- 17: erste Pumpe
- 18: zweite Pumpe
- 19: Beimischelement
- 20: Absperrventil
- 21: Vereisung
- 22: Speicherfluid (Regenwasser)
- 23: Umwälzpumpe
- 24: Behälter
- 25: Umgebungstemperatur
- 26: Taupunkttemperatur
- 27: Arbeitsfluidtemperatur
- 28: Aufladezyklen
- 30,45, 46: weitere Vorrichtungen
- 31: Grundwasserentnahmebrunnen
- 32: Grundwasserrückgabebrunnen
- 33,34: Grundwasserleitungen
- 35: Füllhöhe
- 36: Grundwasserspiegel
- 37: externe Umwälzpumpe
- 38: Wärmeübertrager
- 39: siebte Leitung
- 40: achte Leitung
- 41: Umschaltventil
- 42: Rückschlagventil
- 43: freier Auslauf
- 44: Trennwand

## Patentansprüche

1. Vorrichtung (1) zur Wärmeversorgung eines Gebäudes, umfassend
- einen Luft/Fluid-Wärmetauscher (2) zur Erwärmung eines Arbeitsfluides, insbesondere einer Sole, mittels Umgebungsluft,
- eine Wärmepumpe mit einem Verdampfer (3) zur Erwärmung des Gebäudes und/oder von Wasser für das Gebäude,
- einen Latentwärmespeicher (4),
- einen ersten Fluidkreislauf für das Arbeitsfluid zwischen dem Luft/Fluid-Wärmetauscher (2) und dem Latentwärmespeicher (4) zum Aufladen des Latentwärmespeichers (4) unter Umgehung des Verdampfers (3) der Wärmepumpe,
- einen zweiten Fluidkreislauf für das Arbeitsfluid zwischen dem Luft/Fluid-Wärmetauscher (2) und dem Verdampfer (3) der Wärmepumpe, und
- einen dritten Fluidkreislauf für das Arbeitsfluid zwischen dem Latentwärmespeicher (4) und dem Verdampfer (3) der Wärmepumpe.

2. Vorrichtung nach Anspruch 1, **dadurch gekennzeichnet, dass** die drei Fluidkreisläufe miteinander verbunden sind, so dass in allen drei Fluidkreisläufen dasselbe Arbeitsfluid fließt.

3. Vorrichtung nach einem der vorhergehenden Ansprüche, **gekennzeichnet durch** zumindest eine erste Pumpe (17), angeordnet zum Bewegen des Arbeitsfluides im ersten Fluidkreislauf, wobei die erste Pumpe (17) insbesondere gleichzeitig zum Bewegen des Arbeitsfluides im zweiten Fluidkreislauf angeordnet ist.

4. Vorrichtung nach einem der vorhergehenden Ansprüche, **gekennzeichnet durch** zumindest eine zweite Pumpe (18), angeordnet zum Bewegen des Arbeitsfluides im zweiten Fluidkreislauf und/oder im dritten Fluidkreislauf.

5. Vorrichtung nach einem der vorhergehenden Ansprüche, **gekennzeichnet durch** ein zum Beimischen von warmem Arbeitsfluid in den Zulauf (5) des Luft/Fluid-Wärmetauschers (2) ausgebildetes Beimischelement (19), um eine Vereisung im Luft/Fluid-Wärmetauscher (2) zu vermeiden.

6. Vorrichtung nach einem der vorhergehenden Ansprüche, **dadurch gekennzeichnet, dass** das Arbeitsfluid eine Sole, insbesondere ein Ethylenglycol/Wasser-Gemisch, ist.

7. Vorrichtung nach einem der vorhergehenden Ansprüche, **dadurch gekennzeichnet, dass** der Latentwärmespeicher (4) ein Speicherfluid (22), insbesondere Wasser, und als Wärmetauscher ausgebildete Fluidleitungen (16) im Speicherfluid (22) für das Arbeitsfluid umfasst.

8. Vorrichtung nach Anspruch 7, **dadurch gekennzeichnet, dass** der Latentwärmespeicher (4) gleichzeitig als Regenwasserzisterne ausgebildet ist, wobei das Speicherfluid (22) Regenwasser ist.

9. Vorrichtung nach einem der Ansprüche 7 oder 8, **dadurch gekennzeichnet, dass** der Latentwärmespeicher (4) eine Umwälzpumpe (23) für das Speicherfluid (22) umfasst.

10. Vorrichtung nach einem der vorhergehenden Ansprüche, **gekennzeichnet durch** eine Steuereinheit, die ausgebildet ist:
- zur Erfassung einer Umgebungslufttemperatur des Luft/Fluid-Wärmetauschers (2),
- zur Erfassung einer Taupunkttemperatur der Umgebungsluft des Luft/Fluid-Wärmetauschers (2), insbesondere **durch** Messung der Umgebungsluftfeuchtigkeit,
- zur Erfassung einer Arbeitsfluidaustrittstemperatur des Latentwärmespeichers (4), und
- zum Einschalten des Arbeitsfluidstroms im ersten Fluidkreislauf zum Aufladen des Latentwärmespeichers (4), nur dann, wenn die Umgebungslufttemperatur über der Arbeitsfluidaustrittstemperatur liegt, und/oder nur dann, wenn die Arbeitsfluidaustrittstemperatur, um insbesondere zumindest 2 Kelvin, über der Taupunkttemperatur liegt.

11. Verfahren zur Wärmeversorgung eines Gebäudes, für einen Latentwärmespeicher (4), der über einen ersten Fluidkreislauf mit einem Luft/Fluid-Wärmetauscher (2) verbunden ist, wobei der Latentwärmespeicher (4) mittels des Luft/Fluid-Wärmetauschers (2) aufgeladen wird,
- nur dann, wenn eine Umgebungslufttemperatur des Luft/Fluid-Wärmetauschers (2) über einer Arbeitsfluidaustrittstemperatur des Latentwärmespeichers (4) liegt, und/oder
- nur dann, wenn die Arbeitsfluidaustrittstemperatur des Latentwärmespeichers (4) über der Taupunkttemperatur der Umgebungsluft des Luft/Fluid-Wärmetauschers (2) liegt.

12. Verfahren nach Anspruch 11, **dadurch gekennzeichnet, dass** der Latentwärmespeicher (4) mittels des Luft/Fluid-Wärmetauschers (2) aufgeladen wird,
- nur dann, wenn die Umgebungslufttemperatur zumindest 1 Kelvin, insbesondere zumindest 2 K, über der Arbeitsfluidaustrittstemperatur des Latentwärmespeichers (4) liegt, und/oder
- nur dann, wenn die Arbeitsfluidaustrittstemperatur des Latentwärmespeichers (4) zumindest 1 K, insbesondere zumindest 2 K, über der Taupunkttemperatur liegt.

13. Verfahren nach einem der Ansprüche 11 oder 12, wobei mittels einer Wärmepumpe mit einem Verdampfer (3) der Latentwärmespeicher (4) entladen wird, und wobei einzelne Aufladezyklen (28) in der Regel höchstens zwölf Stunden, insbesondere höchstens sechs Stunden, andauern, und wobei die einzelnen Aufladezyklen (28) durch eine Aufladepause und/oder eine Entladung des Latentwärmespeichers (4) unterbrochen sind.

14. Vorrichtung (30) zur Wärmeversorgung eines Gebäudes, umfassend
- einen zur Aufnahme von Grundwasser ausgebildeten Latentwärmespeicher (4), wobei der Latentwärmespeicher (4) zur Erwärmung eines Arbeitsfluides, insbesondere einer Sole, mittels des Grundwassers ausgebildet ist,
- eine Wärmepumpe mit einem Verdampfer (3) zur Erwärmung des Gebäudes und/oder von Wasser für das Gebäude,
- einen Fluidkreislauf für das Arbeitsfluid zwischen dem Latentwärmespeicher (4) und dem Verdampfer (3) der Wärmepumpe,
- einen Grundwasserentnahmebrunnen (31), und
- einen Grundwasserzulauf (33) vom Grundwasserentnahmebrunnen (35) in den Latentwärmespeicher (4).

15. Vorrichtung nach Anspruch 14, **gekennzeichnet durch** einen Grundwasserrückgabebrunnen (32) und eine Grundwasserrückführung (34) vom Latentwärmespeicher (4) in den Grundwasserrückgabebrunnen (32).

16. Vorrichtung (45) zur Wärmeversorgung eines Gebäudes, umfassend
- einen zur Aufnahme eines Speicherfluides (22), vorzugsweise Wasser, ausgebildeten Latentwärmespeicher (4), wobei der Latentwärmespeicher (4) zur Erwärmung eines Arbeitsfluides, insbesondere einer Sole, mittels des Speicherfluides (22) ausgebildet ist,
- eine Wärmepumpe mit einem Verdampfer (3) zur Erwärmung des Gebäudes und/oder von Wasser für das Gebäude,
- einen Fluidkreislauf für das Arbeitsfluid zwischen dem Latentwärmespeicher (4) und dem Verdampfer (3) der Wärmepumpe, und
- einen Luft/Fluid-Wärmetauscher (2) zum Erwärmen des Speicherfluides (22).

17. Vorrichtung nach Anspruch 16, **dadurch gekennzeichnet, dass** ein vom Luft/Fluid-Wärmetauscher (2) kommender Rücklauf als freier Auslauf (43) im Latentwärmespeicher (4) ausgebildet ist.

18. Vorrichtung nach einem der Ansprüche 16 oder 17, **gekennzeichnet durch** einen außerhalb des Latentwärmespeichers (4) angeordneten Wärmeübertrager (38) zum Übertragen der Wärme aus dem Speicherfluid in das Arbeitsfluid.
